# EUROPÄISCHE PATENTANMELDUNG

(11) **EP 0 741 385 A1**
(43) Veröffentlichungstag der Anmeldung: **06.11.1996**
(21) Anmeldenummer: 95106580.4
(22) Anmeldetag: 02.05.1995
(51) Int. Cl.: G11B 23/38, G11B 23/40

(54) **Compactdisk mit hohem Repräsentationswert**

(71) Anmelder: Fink, Christian, D-40545 Düsseldorf (DE); Lennartz, Peter, D-41528 Dormagen-Zons (DE)
(72) Erfinder: Fink, Christian, D-40545 Düsseldorf (DE)
(74) Vertreter: Meyer-Roxlau, Reiner Ferdinand, Dipl.-Ing.

(57) **Zusammenfassung**

Zur repräsentativ hochwertigen Gestaltung einer Compactdisk ist auf der der Datenträgerseite der Compactdisk (1) abgewandten Seite eine Platte (3) aus Edelmetall angeordnet, deren Außendurchmesser (d) mindestens 2 mm kleiner als der Außendurchmesser (D) der Compactdisk (1) ist und die eine Mittelbohrung (4) aufweist, deren Durchmesser mindestens so groß ist wie der Durchmesser der Mittelbohrung (5) der eigentlichen Compactdisk (1), und ist die Edelmetallplatte (3) an der eigentlichen Compactdisk (1) unverlierbar, jedoch lösbar befestigt.

## Beschreibung

Die Erfindung betrifft eine Compactdisk mit hohem Repräsentationswert.

Sowohl bei persönlichen Geschenken und Werbegeschenken einerseits als auch andererseits bei besonderen Anlässen, beispielsweise bei der Eröffnung von Festspielen, Konzerthallen, anläßlich besonderer Jahrestage etc., besteht häufig ein Bedürfnis für einen hochwertigen Repräsentationsgegenstand, der für einen ausgewählten Personenkreis bestimmt ist. Als Grundlage hierfür bietet sich eine Compactdisk mit einer entsprechenden Aufzeichnung, beispielsweise eines Eröffnungskonzerts etc., an. Derartige Compactdisks zu entsprechenden Anlässen in gegebenenfalls limitierter Auflage stehen bereits zur Verfügung; jedoch handelt es sich dabei immerhin noch um einen Gegenstand, der sich vom Wert her von einer normalen Compactdisk kaum unterscheidet. Würde man den Preis für einen Compactdisk, die für die angegebenen Anlässe bestimmt ist, einfach nur in Hinblick auf ihre limitierte Auflage vervielfachen, so ist davon auszugehen, daß eine entsprechend teure Compactdisk, da sie abgesehen von einem etwaigen Sammlerwert eigentlich nur den Wert einer normalen Compactdisk hat, kaum Abnehmer findet.

Der Erfindung liegt daher die Aufgabe zugrunde, die Attraktivität zu besonderen Anlässen herausgegebener Compactdisks dadurch zu erhöhen, daß ihnen ein hoher Repräsentationswert verliehen wird, der auch einen verhältnismäßig sehr hohen Gestehungpreis durchaus rechtfertigt.

Diese Aufgabe ist bei einer Compactdisk mit den Merkmalen des Anspruchs 1 gelöst.

Vorteilhafte Weiterbildungen sind aus den Unteransprüchen zu ersehen.

Selbstverständlich kann eine aus einer eigentlichen Compactdisk und einer Edelmetallplatte bestehende Compactdisk-Einheit nur dann tatsächlich als repräsentativ wertvoll angesehen werden, wenn garantiert ist, daß die Edelmetallplatte tatsächlich aus Edelmetall besteht. Es ist zwar davon auszugehen, daß der Hersteller einer solchen repräsentativen Compactdisk-Einheit Edelmetall verwendet; jedoch ist vorstellbar, daß im Wege der Handelskette, bei einem Erwerber oder irgendwie sonst die echte Edelmetallplatte gegen eine falsche Edelmetallplatte ausgetauscht wird, so daß der Besitzer der Compactdisk-Einheit befürchten muß, in der Tat keine repräsentative hochwertige Compactdisk-Einheit zu besitzen. Aus diesem Grund ist erfindungsgemäß weiter vorgesehen, daß die Edelmetallplatte an der eigentlichen Compactdisk nicht nur unverlierbar und lösbar befestigt ist, sondern daß eine Codierung auf der nicht sichtbaren Seite der Edelmetallplatte vorgesehen ist, die ein Echtheitszertifikat darstellt, das durch den ursprünglichen Hersteller oder autorisierte Dritte lesbar ist und auf die bei der Herstellung der eigentlichen Compactdisk für diese vorgesehene Herstellungsnummer zurückgeht. Läßt sich die genannte Codierung nicht in Verbindung mit der auf der eigentlichen Compactdisk vorgesehenen Herstellungsnummer nach dem nur dem ursprünglichen Hersteller bekannten Schlüssel in Einklang bringen, so ist die Echtheit und Qualität des Edelmetalls zumindest fraglich.

Basiert die Codierung zugleich auf einer dem Ersterwerber mitgeteilten Geheimnummer, so kann sogar die Rechtmäßigkeit des jeweiligen Besitzers insbesondere bei dem Versuch einer Veräußerung überprüft werden.

Für die Befestigung der Edelmetallplatte an der eigentlichen Compactdisk kommen zwar grundsätzlich verschiedene Verfahrensweisen infrage; jedoch ist, wie Versuche gezeigt haben, ein vergießendes Verschweißen der Edelmetallplatte an der eigentlichen Compactdisk unter Zuhilfenahme eines Polyacrylharzes zu bevorzugen, das mit dem Polyacrylharz, aus dem die eigentliche Compactdisk hergestellt ist, chemisch identisch sein sollte. Zwar ist es in diesem Fall ohne weiteres möglich, durch Wegschneiden, Wegschleifen oder dergleichen der Polyacrylharzvergußmasse die Edelmetallplatte von der eigentlichen Compactdisk zu trennen; da jedoch dann die eigentliche Compactdisk und die Edelmetallplatte nicht mehr in einheitlichem Verbund zur Weiterveräußerung oder zum Rückerwerb durch den Hersteller angeboten werden können, ist davon auszugehen, daß die Codierung in diesem Fall ihre Funktion eines Zertifikats verloren hat.

Gleiches gilbt selbstverständlich auch für jede andere Art der gegenseitigen Befestigung von Edelmetallplatte und eigentlicher Compactdisk.

Sind die eigentliche Compactdisk und die Edelmetallplatte punktweise miteinander verklebt, so bedarf es zur Lösung dieser Verklebung der Kenntnis der Anordnung der Verklebungspunkte. Sind die Verklebungspunkte im Sinne einer Codierung angeordnet, die nur dem ursprünglichen Hersteller bzw. einem autorisiertem Dritten bekannt ist und die auf der Herstellungsnummer der eigentlichen Compactdisk beruht, so ist die gegenseitige Trennung der beiden Teile durch Dritte nicht möglich, es sei denn, es würde eine Zerstörung der Edelmetallplatte oder der Compactdisk in Kauf genommen. Die beiden Teile können also nur bei Kenntnis der Codierung zerstörungsfrei voneinander getrennt werden, so daß die Anordnung der Verklebungspunkte im Sinne der Codierung bei Unversehrtheit die Funktion der Codierung als Zertifikat übernimmt.

Unter Berücksichtigung der normalen Abmessungen einer Compactdisk läßt sich auf deren der Datenträgerseite gegenüberliegenden Fläche ohne weiteres eine Edelmetallplatte mit dem Gewicht einer Unze anbringen.

In diesem Fall entspricht folglich der Wiederveräußerungswert der Edelmetallplatte dem Wert handelsüblicher Ein-Unzen-Edelmetallbarren, was die repräsentative Hochwertigkeit der erfindungsgemäßen Compactdisk ohne weiteres erkennen läßt. Andererseits ist aber durch die Kombination einer eigentlichen Compactdisk mit einer Edelmetallplatte ein Gegenstand erreicht, der eine gewisse Einmaligkeit besitzt und insbesondere aus der Sicht seiner Attraktivität keineswegs mit einer normalen Compactdisk und einem beigelegten Edelmetallbarren vergleichbar ist.

Nachfolgend wird die Erfindung ausschließlich beispielhaft weiter ins Detail gehend und unter Bezugnahme auf die Zeichnung erläutert; in dieser zeigen:
- Fig. 1: einen Querschnitt durch eine erste Ausführungsform der erfindungsgemäßen Compactdisk mit Vergießverschweißung zwischen Edelmetallplatte und eigentlicher Compactdisk und
- Fig. 2: eine Draufsicht auf eine zweite Ausführungsform der erfindungsgemäßen Compactdisk mit Punktverklebung zwischen Edelmetallplatte und eigentlicher Compactdisk bei Anordnung der Verklebungspunkte entsprechend einer Codierung.

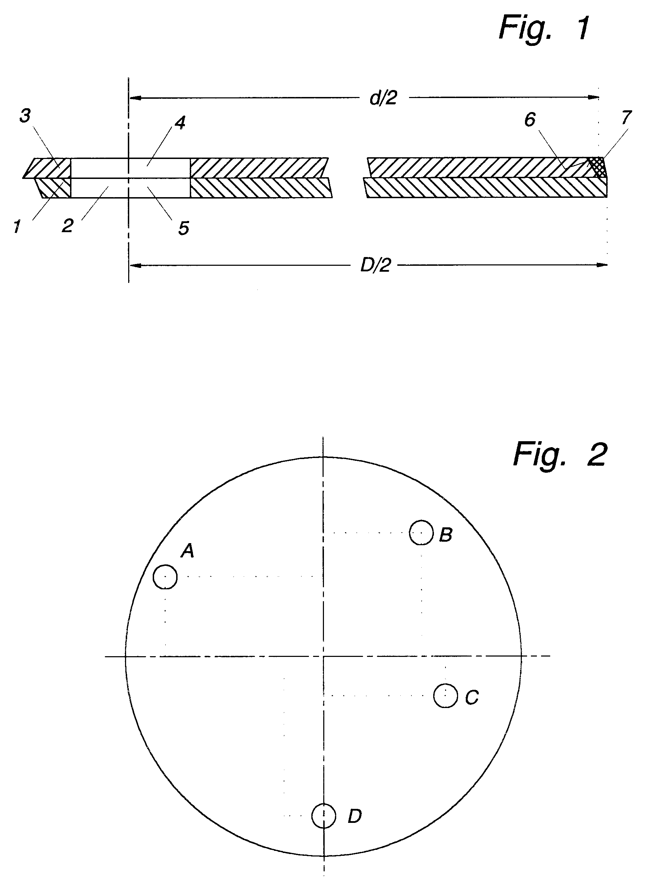

In Fig. 1 ist mit 1 eine eigentliche Compactdisk, in der Regel mit einem Außendurchmesser D von 120 mm, bezeichnet. Auf der der Datenträgerseite 2 abgewandten Fläche der Compactdisk 1 ist eine Edelmetallplatte 3 mit einem Außendurchmesser d von 118 mm angeordnet.

Der Durchmesser der Mittelbohrung 4 der Edelmetallplatte 3 ist mindestens gleich groß wie der Durchmesser der Mittelbohrung 5 der Compactdisk 1.

Der Außenumfang 6 der Edelmetallplatte 3 ist konisch angefast, wobei die Edelmetallplatte 3 mit der zum größeren Anfasungsdurchmesser gehörigen Fläche der Compactdisk 1 zugewandt ist.

Befestigt ist die Edelmetallplatte 3 an der Compactdisk 1 mittels eines umlaufend aufgegossenen Streifens 7 aus Polyacrylharz, vorzugsweise chemisch identisch mit dem Polyacrylharz, aus dem die Compactdisk 1 besteht.

Durch Wegschneiden oder Wegschleifen etc. des Vergießungsstreifens 7 kann die Edelmetallplatte von der Compactdisk 1 abgelöst werden, um den Wert der Edelmetallplatte 3 durch Veräußerung zu realisieren, wobei die Brauchbarkeit der Compactdisk 1 als Datenträger erhalten bleibt.

Zur Sicherung des Erwerbers der Edelmetallplatte 3 hinsichtlich der Qualität des Edelmetalls dient ein an der verdeckten Seite der Edelmetallplatte 3 angebrachter Code im Sinne eines Ursprungs- und zugleich Qualitätszertifikats, wobei diese Funktion per definitionem durch den Hersteller nur so lange Geltung hat, wie die eigentliche Compactdisk 1 und die Edelmetallplatte 3 miteinander verbunden sind. Basiert der Code zugleich auf einer Geheimnummer, die dem Käufer der aus der Compactdisk 1 und der Edelmetallplatte 3 bestehenden repräsentativ hochwertigen Einheit bekanntgegeben wird, so stellt der Code zugleich ein Zertifikat für die Verfügungsberechtigung des Verkäufers der Edelmetallplatte 3 dar.

Fig. 2 zeigt die Anordnung von beispielsweise vier Verklebungspunkten A, B, C und D zwischen der Compactdisk 1 und der Edelmetallplatte 3, die von außen nicht sichtbar sind.

Die Verklebung dieser Punkte A bis D ist eine solche, die mittels eines durch die Edelmetallplatte 3 hindurchgeführten Laserstrahls bestimmter Wellenlänge lösbar ist. Um die Verklebungen auf diese Weise lösen zu können, ist die Kenntnis der Anordnung der Punkte A bis D notwendig. Diese Anordnung beruht auf einer Codierung, die aus der Herstellungsnummer der Compactdisk 1 abgeleitet ist.

Zur Codierung ist generell, also auch bei beiden vorstehend beschriebenen Ausführungsformen, zu beachten, daß jede Compactdisk auf ihrer Datenträgerseite eine sichtbare Herstellungsnummer trägt. Ist die Herstellungsnummer Grundlage für die Erstellung eines Codes und der Codierungsschlüssel zur Ableitung des Codes aus der Herstellungsnummer nur dem ursprünglichen Hersteller der aus der Compactdisk 1 und der Edelmetallplatte 3 bestehenden repräsentativ hochwertigen Compactdisk-Einheit bekannt, so kann nur der Hersteller bzw. eine autorisierter Dritter den Code verstehen und entweder als Mittel zur Lösung der Verklebung verwenden oder generell als Ursprungs- und Qualitätszertifikat akzeptieren und damit bei Rückkauf der Edelmetallplatte 3 deren Wert unmittelbar, d. h. ohne aufwendige und kostenträchtige Materialuntersuchung, geldwertig erstatten.

## Patentansprüche

1. Compactdisk mit hohem Repräsentationswert, **dadurch gekennzeichnet,** daß auf der der Datenträgerseite der Compactdisk (1) abgewandten Seite eine Platte (3) aus Edelmetall angeordnet ist, deren Außendurchmesser (d) mindestens 2 mm kleiner als der Außendurchmesser (D) der Compactdisk (1) ist und die eine Mittelbohrung (4) aufweist, deren Durchmesser mindestens so groß ist wie der Durchmesser der Mittelbohrung (5) der eigentlichen Compactdisk (1), und daß die Edelmetallplatte (3) an der eigentlichen Compactdisk (1) unverlierbar, jedoch lösbar befestigt ist.

2. Compactdisk nach Anspruch 1, **dadurch gekennzeichnet,** daß die Edelmetallplatte (3) an ihrem Außenumfang (6) konisch angefast ist, wobei die Seite der Edelmetallplatte (3) mit dem durch die konische Fase vergrößerten Durchmesser der eigentlichen Compactdisk (1) zugewandt ist.

3. Compactdisk nach Anspruch 1 oder 2, **dadurch gekennzeichnet,** daß die Edelmetallplatte (3) mit der eigentlichen Compactdisk (1) verschweißt ist, wozu die umfangsseitig der Edelmetallplatte (3) an der eigentlichen Compactdisk (1) freigelassene umlaufende Ringfläche unter Übergreifung der konischen Anfasung der Edelmetallplatte (3) mit einem Polyacrylharz vergossen ist.

4. Compactdisk nach Anspruch 3, **dadurch gekennzeichnet,** daß das Polyacrylharz der Vergießung mit dem Polyacrylharz, aus dem die eigentliche Compactdisk (1) besteht, chemisch identisch ist.

5. Compactdisk nach mindestens einem der vorhergehenden Ansprüche, **dadurch gekennzeichnet,** daß auf der der eigentlichen Compactdisk (1) zugewandten Seite der Edelmetallplatte (3) eine Codierung angebracht ist.

6. Compactdisk nach Anspruch 1, **dadurch gekennzeichnet,** daß die Edelmetallplatte (3) mit der eigentlichen Compactdisk (1) punktweise unsichtbar verklebt ist, wobei die Verklebung eines solche ist, die mittels eines durch die Edelmetallplatte (3) hindurchgeführten Laserstrahls lösbar ist.

7. Compactdisk nach Anspruch 6, **dadurch gekennzeichnet,** daß die Koordinaten der Anordnung der Klebestellen (A, B, C, D) einer Codierung entsprechen.

8. Compactdisk nach Anspruch 5 oder 7, **dadurch gekennzeichnet,** daß die Codierung, obwohl von außen nicht erkennbar, mittels eines speziellen Codelesers lesbar ist.

9. Compactdisk nach Anspruch 5 oder 6, **dadurch gekennzeichnet,** daß die Codierung aus der Herstellungsnummer der eigentlichen Compactdisk (1) abgeleitet ist.

10. Compactdisk nach Anspruch 5 oder 6, **dadurch gekennzeichnet,** daß Codierung aus einer Geheimnummer abgeleitet ist, die dem Käufer beim Erwerb der Compactdisk bekanntgegeben wird.

11. Compactdisk nach Anspruch 9 und 10, **dadurch gekennzeichnet,** daß die Codierung aus der Herstellungsnummer der eigentlichen Compactdisk (1) und zusätzlich aus einer Geheimnummer abgeleitet ist, die dem Käufer beim Erwerb der Compactdisk bekanntgegeben wird.

## Geänderte Patentansprüche

### Geänderte Patentansprüche gemäss Regel 86(2) EPÜ.

1. Compactdisk mit hohem Repräsentationswert, **dadurch gekennzeichnet**, daß auf der der Datenträgerseite der Compactdisk (1) zugewandten Seite eine Platte (3) aus Edelmetall angeordnet ist, deren Außendurchmesser (d) mindestens 2 mm kleiner als der Außendurchmesser (D) der Compactdisk (1) ist und die eine Mittelbohrung (4) aufweist, deren Durchmesser mindestens so groß ist wie der Durchmesser der Mittelbohrung (5) der eigentlichen Compactdisk (1), und daß die Edelmetallplatte (3) an der eigentlichen Compactdisk (1) unverlierbar, jedoch lösbar befestigt ist.
2. Compactdisk nach Anspruch 1, **dadurch gekennzeichnet**, daß die Edelmetallplatte (3) an ihrem Außenumfang (6) konisch angefast ist, wobei die Seite der Edelmetallplatte (3) mit dem durch die konische Fase vergrößerten Durchmesser der eigentlichen Compactdisk (1) zugewandt ist.
3. Compactdisk nach Anspruch 1 oder 2, **dadurch gekennzeichnet**, daß die Edelmetallplatte (3) mit der eigentlichen Compactdisk (1) verschweißt ist, wozu die umfangsseitig der Edelmetallplatte (3) an der eigentlichen Compactdisk (1) freigelassene umlaufende Ringfläche unter Übergreifung der konischen Anfasung der Edelmetallplatte (3) mit einem Polyacrylharz vergossen ist.
4. Compactdisk nach Anspruch 3, **dadurch gekennzeichnet**, daß das Polyacrylharz der Vergießung mit dem Polyacrylharz, aus dem die eigentliche Compactdisk (1) besteht, chemisch identisch ist.
5. Compactdisk nach mindestens einem der vorhergehenden Ansprüche, **dadurch gekennzeichnet**, daß auf der der eigentlichen Compactdisk (1) zugewandten Seite der Edelmetallplatte (3) eine Codierung angebracht ist.
6. Compactdisk nach Anspruch 1, **dadurch gekennzeichnet**, daß die Edelmetallplatte (3) mit der eigentlichen Compactdisk (1) punktweise unsichtbar verklebt ist, wobei die Verklebung eines solche ist, die mittels eines durch die Edelmetallplatte (3) hindurchgeführten Laserstrahls lösbar ist.
7. Compactdisk nach Anspruch 6, **dadurch gekennzeichnet**, daß die Koordinaten der Anordnung der Klebestellen (A, B, C, D) einer Codierung entsprechen.
8. Compactdisk nach Anspruch 5 oder 7, **dadurch gekennzeichnet**, daß die Codierung, obwohl von außen nicht erkennbar, mittels eines speziellen Codelesers lesbar ist.
9. Compactdisk nach Anspruch 5 oder 6, **dadurch gekennzeichnet**, daß die Codierung aus der Herstellungsnummer der eigentlichen Compactdisk (1) abgeleitet ist.
10. Compactdisk nach Anspruch 5 oder 6, **dadurch gekennzeichnet**, daß Codierung aus einer Geheimnummer abgeleitet ist, die dem Käufer beim Erwerb der Compactdisk bekanntgegeben wird.
11. Compactdisk nach Anspruch 9 und 10, **dadurch gekennzeichnet**, daß die Codierung aus der Herstellungsnummer der eigentlichen Compactdisk (1) und zusätzlich aus einer Geheimnummer abgeleitet ist, die dem Käufer beim Erwerb der Compactdisk bekanntgegeben wird.
